# FASCICULE DE BREVET EUROPEEN

(11) **EP 0 790 095 B1**
(45) Date de publication et mention de la délivrance du brevet: **11.08.1999**
(21) Numéro de dépôt: 97400330.3
(22) Date de dépôt: 13.02.1997
(51) Int. Cl.: B23D 35/00

(54) **Dispositif de positionnement et de maintien d'une cassette de façonnage sur le bâti d'une machine**
Vorrichtung zum Einstellen und Festsetzen einer Herstellungskassette auf einem Maschinengestell
Device for positioning and clamping a manufacturing unit on the frame of a machine

(30) Priorité: 13.02.1996 FR 9601749
(43) Date de publication de la demande: 20.08.1997
(73) Titulaire: KOMORI-CHAMBON SA, 45060 Orléans (FR)
(72) Inventeur: Roux, Jean-Pierre, 45160 Ardon (FR)
(74) Mandataire: Bruder, Michel

(56) Documents cités:
- DE-U- 29 511 502
- GB-A- 1 434 602
- US-A- 3 800 648
- US-A- 3 877 370

## Description

La présente invention concerne un dispositif de positionnement et de fixation d'une cassette de façonnage sur le bâti d'une machine.

Certaines machines de façonnage comportent plusieurs sous-ensembles, appelés cassettes de façonnage, qui sont disposés en série de façon à réaliser successivement les diverses opérations de façonnage que l'on souhaite mettre en oeuvre sur un flan de carton, telles que notamment les opérations de découpe et de pliage.

Chaque cassette est constituée d'un bâti qui maintient plusieurs cylindres de travail, par exemple un cylindre de coupe et un cylindre contrepartie lisse. Les cassettes de ce type doivent satisfaire à certaines exigences fonctionnelles. Elles doivent tout d'abord être parfaitement interchangeables les unes avec les autres, non seulement en position sur une même machine mais également sur les diverses machines qui constituent un parc de travail, ce qui permet à l'utilisateur de composer l'une quelconque de ses machines de façonnage suivant les besoins propres au travail spécifique qu'il souhaite réaliser.

La mise en place des cassettes sur les machines de façonnage actuelles nécessite une opération d'ajustement de leur positionnement avant toute mise en service.

Chaque cassette de façonnage dispose de moyens permettant d'éloigner les cylindres l'un de l'autre lorsque la cassette est au repos et de les rapprocher à une distance déterminée fonction du travail à réaliser lorsque la cassette est en service.

Pour ce faire l'un des cylindres d'une cassette est monté sur des boîtes palières fixes par rapport à la cassette, alors que l'autre cylindre est monté sur des boîtes palières mobiles. Les cassettes de l'état antérieur de la technique sont pourvues de moyens, habituellement des moyens mécaniques, qui permettent de déplacer les boîtes palières mobiles afin d'amener les cylindres dans la position relative souhaitée.

La présente invention a pour but un dispositif permettant d'assurer de façon rapide et précise les opérations de guidage, de positionnement, et de fixation d'une cassette de façonnage sur une machine, qui ne nécessite pas avant la mise en service un quelconque réglage de positionnement. Le présent dispositif doit de plus être en mesure d'assurer le positionnement relatif des cylindres des cassettes.

La présente invention a ainsi pour objet un dispositif de positionnement et de fixation d'une cassette de façonnage sur le bâti d'une machine, caractérisé en ce qu'il comporte :
- un élément guide apte à maintenir la cassette au-dessus du bâti, sur lequel celle-ci peut coulisser à partir d'un élément d'alimentation destiné à sa manipulation, afin d'être mise dans une position, dite de prépositionnement située sensiblement au-dessus de sa position d'utilisation,
- des moyens de déplacement de l'élément guide dans le sens de la hauteur permettant d'abaisser, ou de relever, la cassette par rapport au bâti, de la position de prépositionnement vers la position d'utilisation et inversement,
- des moyens de serrage qui permettent à l'élément guide d'appliquer et de maintenir fermement la cassette contre le bâti lorsque celle-ci est en position d'utilisation.

Dans un mode de mise en oeuvre de l'invention l'élément guide est susceptible d'occuper trois positions, à savoir :
- une première position dans laquelle il maintient la cassette en position de prépositionnement,
- une seconde position, ou position de positionnement, dans laquelle il n'assure plus le maintien de la cassette et où celle-ci est en appui sur le bâti,
- une troisième position, ou position d'utilisation, dans laquelle il applique et maintient la cassette sur le bâti.

Dans un autre mode de mise en oeuvre de l'invention l'élément guide est constitué d'une plaque, montée mobile verticalement sur un vérin, cette plaque comportant des galets dont les axes sont parallèles à la plaque et sont perpendiculaires au sens de coulissement de la cassette, qui dépassent au-dessus de celle-ci, de façon à définir un plan de roulement sur lequel vient prendre appui une face de contact de la cassette lorsque celle-ci est en phase de mise en place et en position de prépositionnement.

Suivant l'invention la cassette peut également comporter à sa base une rainure de section droite en forme de T, la face supérieure de cette rainure venant en appui sur les galets dans la phase de mise en place et en position de prépositionnement, et la face inférieure de la plaque venant en appui sur la cassette pour appliquer la face de base de celle-ci sur le bâti en position d'utilisation.

Dans une variante intéressante de l'invention le cylindre inférieur d'une cassette est monté à rotation sur des boîtes palières solidaires de coulisseaux aptes à se déplacer verticalement dans des glissières des cassettes, entre deux positions, à savoir une position d'utilisation dans laquelle les deux cylindres de la cassette sont rapprochés, et une position de repos dans laquelle le cylindre inférieur est abaissé, le bâti comportant des moyens commandant le déplacement vertical des coulisseaux pour amener le cylindre inférieur de la position de repos à la position d'utilisation et inversement.
La figure 1 est une vue schématique partielle en élévation d'un bâti d'une machine équipé de plusieurs cassettes de façonnage.
La figure 2 est une vue schématique en perspective d'une cassette de façonnage.
La figure 2a est une vue partielle en élévation d'une variante de mise en oeuvre d'une cassette de façonnage.
La figure 3 est une vue de dessus partielle d'un ban d'une machine de façonnage sur lequel deux éléments guide sont en place.
La figure 4 est une vue schématique partielle en coupe verticale suivant la ligne IV-IV de la figure 3 d'une variante de mise en oeuvre de ce dispositif.
La figure 5 est une vue en coupe partielle suivant la ligne V-V de la figure 8b d'un tenon de centrage de cassette de façonnage.
La figure 6 est une vue en coupe verticale du tenon de centrage représenté sur la figure 5.
La figure 7 est une vue en coupe suivant la ligne V-V de la figure 8b d'une variante de mise en oeuvre d'un tenon de centrage de cassette de façonnage.
Les figures 8a à 8c sont des vues schématiques en coupe transversales partielles d'une cassette et de son élément guide associé respectivement en position de guidage, en position de centrage et en position d'utilisation.
La figure 9 est une vue schématique montrant le principe du centrage assuré par les tenons.
La figure 10 est une vue en coupe verticale et transversale d'une cassette de façonnage mise en place sur le banc d'une machine de façonnage.
La figure 11 est une vue schématique en coupe verticale partielle d'une variante de mise en oeuvre de l'invention.
La figure 12 est une vue de dessus schématique de la
variante représentée sur la figure 11.

On a représenté sous forme schématique sur les figures un bâti 2 d'une machine de façonnage qui repose sur le sol 4 et sur lequel sont disposées des cassettes 1 destinées à assurer les différentes opérations successives de façonnage d'une nappe de carton 5 qui défile au travers des cassettes 1.

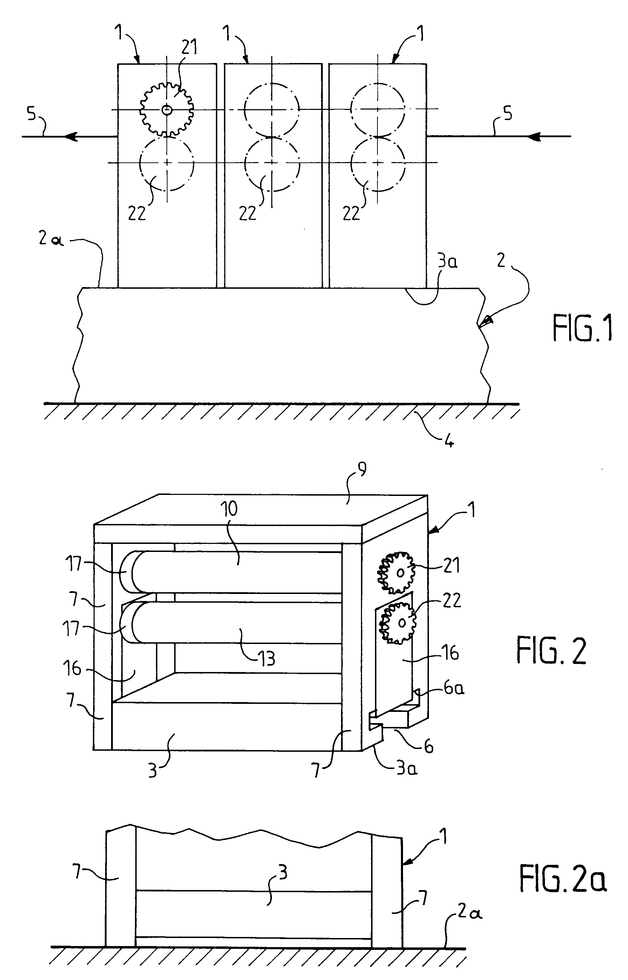

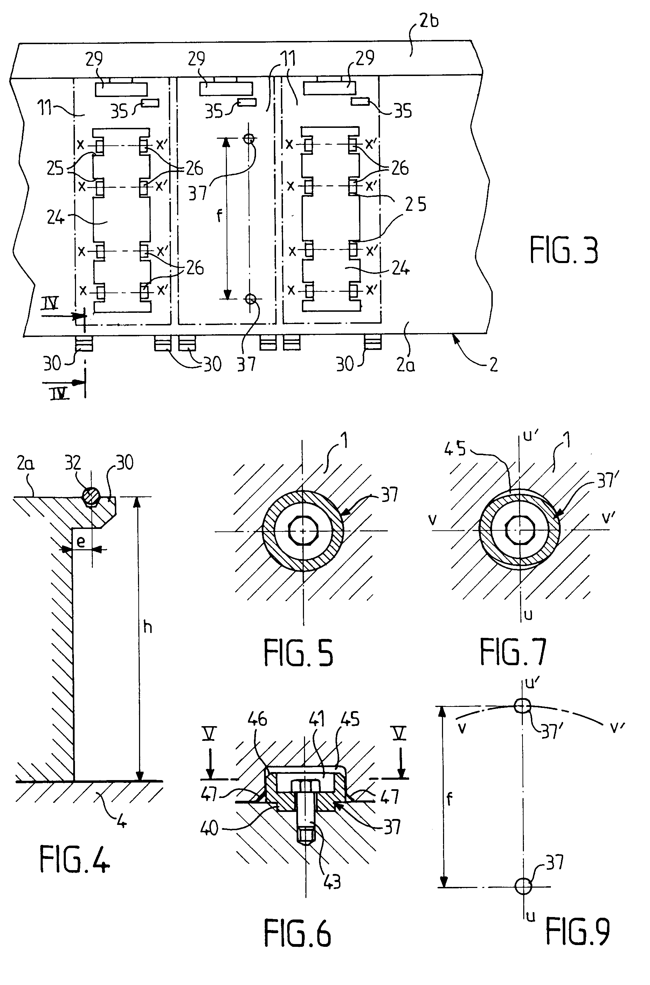

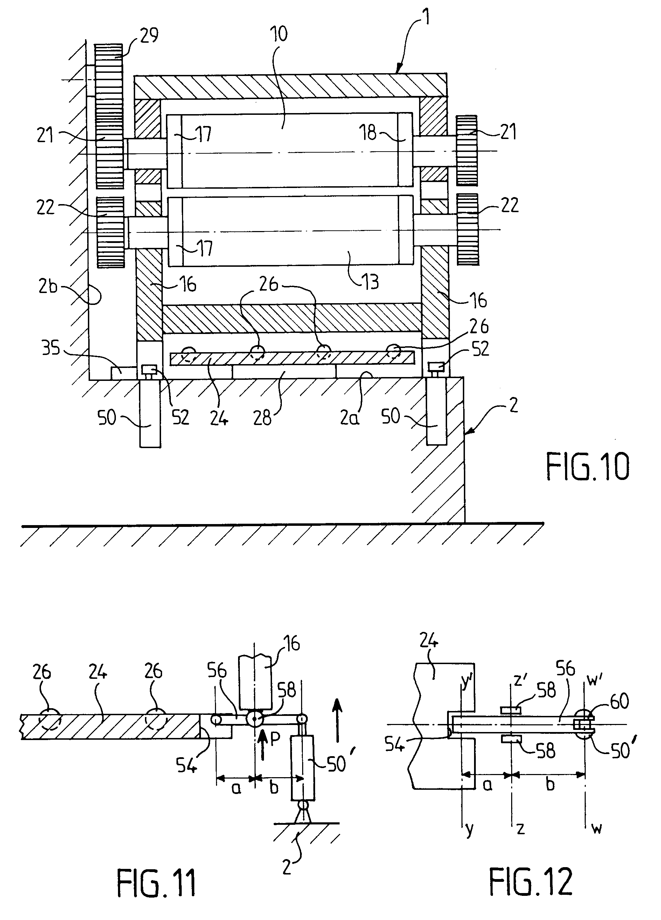

Chaque cassette de façonnage 1 a une structure de forme parallélépipédique et comprend essentiellement une base 3 creusée longitudinalement d'une rainure 6 à section droite en forme de T, deux flancs extrêmes 7 et une paroi supérieure 9. Cette cassette 1 comporte deux cylindres, à savoir un cylindre de coupe 10 monté à rotation sur deux boîtes palières fixes par rapport aux flancs extrêmes 7, et un cylindre contrepartie lisse 13 monté sur deux boîtes palières mobiles. Les boîtes palières mobiles sont montées sur deux coulisseaux 16 qui peuvent se déplacer dans deux glissières verticales des flancs extrêmes 7. Les deux cylindres 10 et 13 sont équipés de chemins de roulement 17 qui, en position d'utilisation de la cassette 1, sont en contact l'un avec l'autre, ce qui permet de définir de façon précise l'écartement optimal des cylindres 10 et 13 pour l'opération à effectuer. Les extrémités des arbres portant les cylindres 10 et 13 sont pourvues de pignons 21,22 qui assurent d'une part la mise en prise des cylindres 10 et 13 de la cassette 1 avec des pignons 29 (figures 3 et 10) appartenant à la chaîne cinématique de la machine sur laquelle la cassette 1 est montée et, d'autre part, la synchronisation entre eux des deux cylindres 10 et 13. En position de repos de la cassette 1 les coulisseaux 16 sont en position abaissée (figure 2), de façon que les chemins de roulement 17 des deux cylindres 10 et 13 ne soient pas en contact.

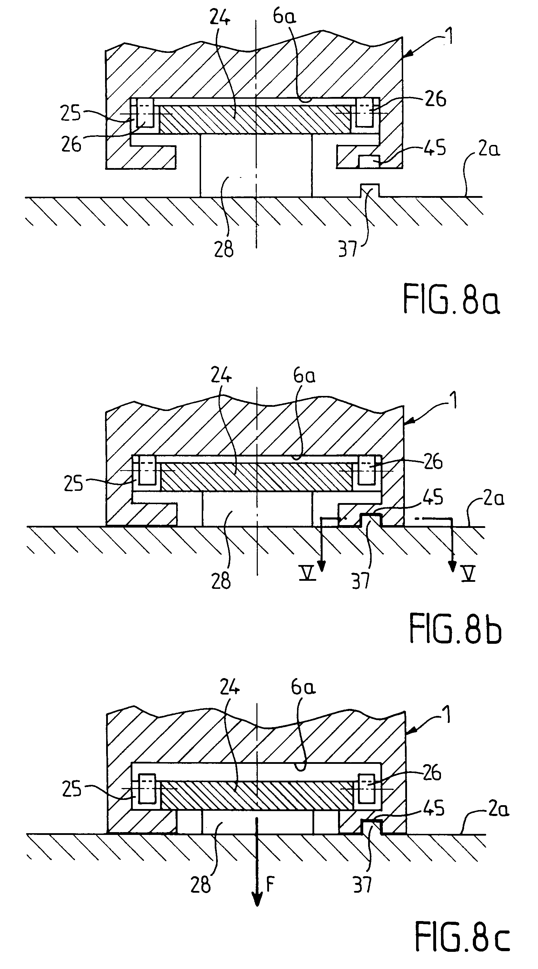

Ainsi que représenté sur la figure 3, le bâti 2 de la machine de façonnage comporte trois zones réceptrices 11 des cassettes, délimitées sur cette figure par des traits mixtes. Chacune de ces zones 11 comporte un élément guide 24 (dont deux seulement sont représentés sur la figure 3) constitué d'une plaque rectangulaire qui est pourvue, sur ses côtés longitudinaux, d'encoches 25 dans lesquelles sont disposés des galets 26 qui dépassent au-dessus de la plaque 24 de façon à constituer une voie de roulement. Cette plaque 24 est montée sur un vérin hydraulique 28 (figures 8 et 10) qui permet de la déplacer dans le sens vertical. Le bâti 2 de la machine comporte une paroi verticale et longitudinale 2b sur laquelle sont disposés des pignons 29 (figures 3 et 10) qui sont respectivement destinés à venir en prise avec l'un des pignons d'entraînement 21 de la cassette 1.

Chaque zone réceptrice 11 du bâti 2 comporte sur la face avant de celui-ci, deux butées de prépositionnement 30 comportant, en coupe transversale, (figure 4) une échancrure en forme de V, destinée à recevoir une barre cylindrique horizontale 32 disposée sur la partie antérieure d'un chariot support de cassette (non représenté sur le dessin) permettant d'assurer le déplacement des cassettes 1. Les butées de prépositionnement 30 permettent de prépositionner les cassettes 1 supportées par le chariot par rapport au bâti 2 à la fois à une hauteur h déterminée (figure 4) et également dans le sens longitudinal du bâti. En effet ces butées sont positionnées de façon telle que, lorsque la barre 32 du chariot supportant une cassette 1 à charger sur le bâti 2 est maintenue dans l'échancrure en forme de V de celle-ci, la face supérieure 6a de la rainure 6 en forme de T d'une cassette 1, c'est-à-dire la surface d'appui de celle-ci lorsqu'elle n'est pas en place sur la machine, se trouve au même niveau que la partie supérieure des galets 26. Dans ces conditions, pour mettre en place une cassette 1 sur la face de réception horizontale 2a du bâti 2 il suffit de faire coulisser celle-ci sur les galets du chariot support, jusqu'à ce que la face supérieure 6a de la rainure 6 vienne en appui sur les galets 26 de la plaque 24, puis sur ces derniers jusqu'à ce que la cassette 1 vienne en contact avec une butée 35 (figure 3) solidaire de la partie verticale 2b du bâti 2. Au cours de ce déplacement les flancs latéraux de la plaque 24 sont en portée sur les parois internes transversales de la rainure 6 à section droite en T et assurent ainsi le guidage transversal de la cassette 1. La cassette 1 se trouve ainsi prépositionnée par rapport au bâti 2 légèrement au-dessus de la face de réception horizontale 2a de celui-ci. Cependant un tel prépositionnement n'est pas d'une précision suffisante pour que la machine de façonnage soit en mesure de fournir des résultats satisfaisants, sans réglage préalable.

C'est pourquoi la face de réception 2a du bâti 2 comporte également deux pions de centrage 37 qui sont éloignés l'un de l'autre d'une distance f aussi grande que possible, de façon à obtenir une bonne précision. Chaque pion 37 est de forme cylindrique et comporte à sa base un bossage cylindrique 40 (figures 5 et 6) qui vient s'ajuster avec précision dans une cavité de dimensions correspondantes creusée dans la face de réception 2a du bâti 2, ce qui permet de positionner le pion 37 sur celui-ci avec une grande précision. Le pion de centrage 37 est creusé d'une cuvette centrale 41 dont le fond est percé d'un orifice qui est traversé d'une vis 43 qui assure sa fixation sur la face de réception 2a du bâti 2. La face inférieure 3a de la base 3 de la cassette 1 est creusée de deux cavités 45 dont l'éloignement f des centres ainsi que le diamètre correspondent à ceux des pions 37, ces cavités 45 étant usinées avec une grande précision. Dans ces conditions, et comme représenté sur la figure 8a, lorsque la cassette 1 est en contact avec la butée 35 elle se trouve au voisinage proche de sa position définitive mais au-dessus de celle-ci, (position de prépositionnement) si bien qu'il suffit de descendre le vérin 28 pour abaisser la cassette 1 et amener les cavités 45 sur les pions de centrage 37.

En fait le rôle des pions de centrage 37 est d'assurer un ajustement de la position de la cassette 1. Cet ajustement sera plus facile à mettre en oeuvre si on réalise, comme représenté sur la figure 6, des chanfreins respectifs 46 et 47 sur les pions de centrage 37 et à l'entrée des cavités 45.

On peut également améliorer la facilité de l'ajustement de la position de la cassette 1 sur la face de réception 2a du bâti 2 en réalisant un second pion 37' (figure 7) qui ne soit pas circulaire, de façon, comme représenté sur la figure 9, à constituer un ajustement uniquement dans une direction vv' perpendiculaire à la ligne uu' joignant les centres des deux pions 37 et 37'. En effet, en supposant que le pion circulaire 37 se mette en place le premier dans la cavité 45 de la cassette 1, le rôle du second pion 37' sera alors d'assurer le positionnement de la cassette 1 dans une position située sur l'arc de cercle vv' ayant le pion 37 pour centre et la distance f séparant les deux pions pour rayon. Dans ces conditions il n'est nul besoin, pour assurer un positionnement rigoureux des deux pions 37 et 37', de réaliser un positionnement du pion 37' suivant l'axe uu' joignant le centre de ceux-ci. Un tel positionnement a seulement pour effet de rendre le système de centrage hyperstatique et de rendre plus difficile le positionnement de la cassette 1.

Le pion 37' représenté sur la figure 7 est constitué d'un pion cylindrique, tel que celui représenté sur la figure 5, dont on a meulé la périphérie afin de ne conserver la cote correspondant à son diamètre initial qu'à la partie située dans une zone proche de l'axe vv' perpendiculaire à l'axe uu'. Bien entendu le pion 37' pourrait être de toute autre forme, dans la mesure où sa dimension dans le sens de l'axe vv' est telle qu'elle lui permette de s'ajuster avec précision dans la cavité 45 correspondante de la cassette 1.

Une fois la cassette 1 positionnée sur la face de réception 2a du bâti 2 on la bride sur celui-ci en exerçant, avec la plaque 24, un effort F vers le bas sur la base de la rainure 6 à section en T, au moyen du vérin 28 (figure 8c).

Le dispositif suivant l'invention comporte également des moyens qui permettent, à partir du bâti 2 de la cassette 1, de déplacer vers le haut les coulisseaux 16 qui supportent les boîtes palières du cylindre contrepartie 13 (cylindre inférieur) de façon à amener et maintenir en contact les chemins de roulement 17 de ces cylindres. Ces moyens sont constitués, comme représenté sur la figure 10, de vérins hydrauliques 50 encastrés dans le bâti 2, sous chaque coulisseau 16 de la cassette 1, dont les têtes de pistons 52 viennent en appui sur les bases respectives des coulisseaux 16 pour les soulever.

Ce mode de mise en oeuvre permet de réaliser des cassettes totalement passives, c'est-à-dire des cassettes qui ne comportent aucun système d'actionnement de déplacement des cylindres. Les cassettes de ce type se trouvent ainsi simplifiées. Dans la mesure où l'on peut utiliser toute une série de cassettes sur une même machine on diminue ainsi du même coup le nombre de systèmes de commande nécessaires ce qui représente une économie substantielle. Par ailleurs, cela permet de remplacer sans difficultés les systèmes mécaniques de déplacement utilisés habituellement sur ces cassettes par des systèmes hydrauliques. De plus, l'utilisation de systèmes de commande hydrauliques permet de doser facilement l'effort avec lequel on maintient les deux cylindres 10 et 13 appliqués l'un contre l'autre. On peut ainsi utiliser des vérins hydrauliques 50 qui, lorsque l'effort atteint une certaine valeur donnée prédéterminée "décrochent" et libèrent le cylindre contrepartie 13 ce qui permet alors à celui-ci de se libérer et de s'éloigner du cylindre de coupe 10. Une telle disposition est particulièrement intéressante dans le cas ou un bourrage se produit en cours de travail entre les cylindres.

Dans un mode de mise en oeuvre de l'invention, représenté sur la figure 2a, la base 3 de la cassette 1 se trouve à un niveau supérieur aux faces inférieures des flancs extrêmes 7, de façon que lorsque la cassette 1 repose sur le bâti 2 elle se trouve en appui uniquement par la base de ses flancs extrêmes 7. Dans ces conditions, la force de bridage appliquée par l'élément guide 24 sur la cassette 1 s'exerce directement sur les flancs extrêmes de celle-ci, si bien que l'on améliore ainsi de façon notable la fixation de la cassette 1 sur le bâti 2.

Dans un autre mode de mise en oeuvre de l'invention, représenté sur les figures 11 et 12, la plaque 24 est pourvue, à chacune de ses extrémités, d'une encoche axiale 54 à l'intérieur de laquelle est engagé un levier 56 articulé autour d'un axe yy' transversal à la plaque 24. A une distance a de l'axe yy' le levier 56 est pourvu de deux galets 58 montés de part et d'autre de celui-ci sur un axe zz', et son extrémité se termine à une distance b des galets 58 par une fourche 60 qui le relie à l'extrémité d'un vérin 50' sensiblement vertical par un axe ww'. La distance a est telle que les galets 58 se trouvent situés sous le coulisseau 16 lorsque la cassette 1 est en place sur le bâti 2.

Ce mode de mise en oeuvre est particulièrement intéressant d'une part en ce qu'il permet aux vérins 50' d'appliquer une force P aux coulisseaux 16 par l'intermédiaire d'un bras de levier qui prend appui non pas sur le bâti (et qui de ce fait aurait tendance à s'opposer à la force de bridage exercée par le vérin 28 sur la cassette 1), mais sur la plaque 24, si bien que dès lors cette force s'ajoute à la force de bridage.

Ce mode de mise en oeuvre est également intéressant en ce qu'il permet, en jouant sur la longueur des bras de levier a et b du levier 56, de pouvoir utiliser des vérins 50' de capacité réduite, ce qui permet de réduire la taille de ceux-ci.

## Revendications

1. Dispositif de positionnement et de fixation d'une cassette (1) de façonnage sur le bâti (2) d'une machine caractérisé en ce qu'il comporte :
- un élément guide (24) apte à maintenir la cassette (1) au-dessus du bâti (2), sur lequel celle-ci peut coulisser à partir d'un élément d'alimentation destiné à sa manipulation, afin d'être mise dans une position, dite de prépositionnement, située sensiblement au-dessus de sa position d'utilisation,
- des moyens de déplacement (28) de l'élément guide (24) dans le sens de la hauteur permettant d'abaisser, ou de relever, la cassette (1) par rapport au bâti (2), de la position de prépositionnement vers la position d'utilisation et inversement,
- des moyens de serrage qui permettent à l'élément guide (24) d'appliquer et de maintenir fermement la cassette (1) contre le bâti (2) lorsque celle-ci est en position d'utilisation.

2. Dispositif suivant la revendication 1 caractérisé en ce que l'élément guide (24) est susceptible d'occuper trois positions, à savoir :
- une première position dans laquelle il maintient la cassette (1) en position de prépositionnement,
- une seconde position ou position de positionnement, dans laquelle il n'assure plus le maintien de la cassette (1) et où celle-ci est en appui sur le bâti (2),
- une troisième position, ou position d'utilisation, dans laquelle il applique et maintient la cassette (1) sur le bâti (2).

3. Dispositif suivant l'une des revendications 1 ou 2 caractérisé en ce que l'élément guide est constitué d'une plaque (24), montée mobile verticalement sur un vérin (28), cette plaque (24) comportant des galets (26) dont les axes (xx') sont parallèles à la plaque et perpendiculaires au sens de coulissement de la cassette (1), qui dépassent au-dessus de celle-ci, de façon à définir un plan de roulement sur lequel vient prendre appui une face de contact (6a) de la cassette (1) lorsque celle-ci est en phase de mise en place vers sa position de prépositionnement.

4. Dispositif suivant l'une quelconque des revendications précédentes caractérisé en ce que la face supérieure du bâti (2) et la face inférieure de la cassette (1) comportent deux couples d'éléments de centrage mâle et femelle de forme complémentaire qui s'emboîtent en position d'utilisation.

5. Dispositif suivant la revendication 4 caractérisé en ce que l'un des éléments de centrage est constitué d'un pion cylindrique destiné à coopérer avec une cuvette de même forme, et l'autre élément de centrage est également constitué d'un pion destiné à s'ajuster dans une cavité cylindrique, cet élément s'ajustant dans la cavité cylindrique uniquement dans une direction (vv') perpendiculaire à une ligne (uu') joignant les centres des deux pions.

6. Dispositif suivant l'une quelconque des revendications précédentes caractérisé en ce que le bâti (2) et l'élément d'alimentation destiné à la manutention de la cassette (1) comportent des moyens aptes à positionner à la fois dans le sens de la hauteur et dans le sens latéral l'élément d'alimentation par rapport au bâti (2) dans une position dite d'avant prépositionnement tel que la cassette soit en position pour coulisser sur l'élément guide.

7. Dispositif suivant l'une des revendications 3 à 6 caractérisé en ce que la cassette (1) comporte à sa base (3a) une rainure (6) de section droite en forme de T, la face supérieure (6a) de cette rainure (6) venant en appui sur les galets (26) dans la phase de mise en place et en position de prépositionnement, et la face inférieure de la plaque (24) venant en appui sur la cassette (1) pour appliquer la face de base (3a) de celle-ci sur le bâti (2) en position d'utilisation.

8. Dispositif suivant l'une quelconque des revendications précédentes caractérisé en ce que la cassette (1) comprend deux flancs extrêmes (7) qui sont seuls en appui sur le bâti (2) en position d'utilisation, les moyens de serrage prenant appui sur ces flancs extrêmes (7).

9. Dispositif suivant l'une quelconque des revendications précédentes caractérisé en ce que la cassette comprend un cylindre supérieur (10) et un cylindre inférieur (13), le cylindre inférieur (13) d'une cassette (1) est monté à rotation sur des boîtes palières solidaires de coulisseaux (16) aptes à se déplacer verticalement dans des glissières des cassettes (1), entre deux positions, à savoir une position d'utilisation dans laquelle les deux cylindres (10,13) de la cassette (1) sont rapprochés, et une position de repos dans laquelle le cylindre inférieur (13) est abaissé, le bâti (2) comportant des moyens commandant le déplacement vertical des coulisseaux (16) pour amener le cylindre inférieur (13) de la position de repos à la position d'utilisation et inversement.

10. Dispositif suivant la revendication 9 caractérisé en ce que les moyens de commande sont constitués de vérins (50) dont la tête vient en appui sur la base des coulisseaux (16) pour commander le déplacement vertical de ceux-ci.

11. Dispositif suivant la revendication 10 caractérisé en ce que la tête du vérin (50) agit sur une extrémité d'un levier (56) dont l'autre extrémité prend appui sur les moyens de serrage (24), ce levier (56) venant en appui sur le coulisseau (16) pour assurer son déplacement vertical.

## Claims

1. Device for positioning and clamping a manufacturing unit (1) on the frame (2) of a machine, characterized in that it comprises:
- a guide element (24) adapted to maintain the unit (1) above the frame (2), on which said unit may slide from a supply element intended for manipulation thereof, in order to be placed in a so-called position of pre-positioning located substantially above its position of use,
- means (28) for displacing the guide element (24) in height, making it possible to lower, or raise, the unit (1) with respect to the frame (2), from the position of prepositioning towards the position of use, and vice versa,
- clamping means which allow the guide element (24) to apply and firmily maintain the unit (1) against the frame (2) when said unit is in position of use.

2. Device according to Claim 1, characterized in that the guide element (24) is capable of occupying three positions, namely:
- a first position, in which it holds the unit (1) in position of prepositioning,
- a second position, or position of positioning, in which it no longer ensures hold of the unit (1) and where the latter is in abutment on the frame (2),
- a third position, or position of use, in which it applies and maintains the unit (1) on the frame (2).

3. Device according to one of Claims 1 or 2, characterized in that the guide element is constituted by a plate (24), mounted to move vertically on a jack (28), this plate (24) comprising rollers (26) of which the axes (xx') are parallel to the plate and perpendicular to the direction of slide of the unit (1), which project above the latter, so as to define a centre line on which abuts a contact face (6a) of the unit (1) when the latter is in phase of positioning towards its position of prepositioning.

4. Device according to any one of the preceding Claims, characterized in that the upper face of the frame (2) and the lower face of the unit (1) comprise two pairs of male and female centering elements of complementary shape which fit together in position of use.

5. Device according to Claim 4, characterized in that one of the centering elements is constituted by a cylindrical stud intended to cooperate with a dish of the same shape, and the other centering element is also constituted by a stud intended to fit in a cylindrical cavity, this element fitting in the cylindrical cavity solely in a direction (vv') perpendicular to a line (uu') joining the centres of the two studs.

6. Device according to any one of the preceding Claims, characterized in that the frame (2) and the supply element intended for handling the unit (1) comprise means adapted to position, both in height and in the lateral direction, the supply element will, respect to the frame (2) in a so-called before prepositioning position such that the unit is in position to slide on the guide element.

7. Device according to one of Claims 3 to 6, characterized in that the unit (1) comprises at its base (3a) a groove (6) of T-shaped cross-section, the upper face (6a) of this groove (6) coming into abutment on the rollers (26) in the phase of positioning and in position of prepositioning, and the lower face of the plate (24) coming into abutment on the unit (1) to apply the face of base (3a) of the latter on the frame (2) in position of use.

8. Device according to any one of the preceding Claims, characterized in that the unit (1) comprises two end faces (7) which, alone, are in abutment on the frame (2) in position of use, the clamping means abutting on these end faces.

9. Device according to any one of the preceding Claims, characterized in that the unit comprises an upper cylinder (10) and a lower cylinder (13), the lower cylinder (13) of a unit (1) is mounted to rotate on bearing boxes fast with slide blocks (16) adapted to move vertically in slideways of the units (1), between two positions, namely a position of use in which the two cylinders (10, 13) of the unit (1) are brought closer, and a position of rest in which the lower cylinder (13) is lowered, the frame (2) comprising means controlling the vertical displacement of the slide blocks (16) to take the lower cylinder (13) from the position of rest to the position of use, and vice versa.

10. Device according to Claim 9, characterized in that the control means are constituted by jacks (50) of which the head comes into abutment on the base of the slide blocks (16) to control the vertical displacement thereof.

11. Device according to Claim 10, characterized in that the head of the jack (50) acts on one end of a lever (56) of which the other end abuts on the clamping means (24), this lever (56) coming into abutment on the slide block (16) to ensure vertical displacement thereof.

## Patentansprüche

1. Vorrichtung zum Einstellen und Festsetzen einer Herstellungskassette (1) auf einem Maschinengestell (2), dadurch gekennzeichnet, daß sie umfaßt:
- ein Führungselement (24) zum Halten der Kassette (1) über dem Gestell (2), auf dem diese ausgehend von einem Versorgungselement zu ihrer Bedienung gleiten kann, um in eine sogenannte Vorpositionierungsstellung gebracht zu werden, die im wesentlichen über ihrer Betriebsstellung liegt,
- Mittel (28) zur Höhenverstellung des Führungselementes (24), mit denen die Kassette (1) in Bezug auf das Geste (2) von der Vorpositionierungsstellung in die Betriebsstellung und umgekehrt abgesenkt bzw. angehoben werden kann,
- Feststellmittel, mit denen das Führungselement (24) die Kassette (1), wenn sich diese in Betriebsstellung befindet, gegen das Gestell (2) drücken und In dieser Stellung halten kann.

2. Vorrichtung nach Anspruch 1, dadurch gekennzeichnet, daß das Führungselement (24) drei Stellungen einnehmen kann, nämlich:
- eine erste Stellung, in der es die Kassette (1) in der Vorpositionierungsstellung hält,
- eine zweite Stellung oder Positionierungsstellung, in der es die Kassette (1) nicht mehr hält und diese auf dem Gestell (2) aufliegt,
- eine dritte Stellung oder Betriebsstellung, in der es die Kassette (1) auf das Gestell (2) drückt und in dieser Stellung hält.

3. Vorrichtung nach einem der Ansprüche 1 oder 2, dadurch gekennzeichnet, daß das Führungselement aus einer Platte (24) gebildet Ist, die beweglich senkrecht auf einem Zylinder (28) angebracht ist, wobei diese Platte (24) Rollen (26) aufweist, deren Achsen (xx') parallel zur Platte und quer zur Gleitrichtung der Kassette (1 ) verlaufen, die über dieser so hervorstehen, daß eine Rollebene definiert wird, auf der eine Kontaktfläche (6a) der Kassette (1) dann zur Anlage kommt, wenn diese sich in der Phase befindet, in der sie in ihre Vorpositionierungsstellung gebracht wird.

4. Vorrichtung nach einem der vorhergehenden Ansprüche, dadurch gekennzeichnet, daß die Oberseite des Gestells (2) und die Unterseite der Kassette (1) zwei Zentrierelementpaare in Steckausführung komplementärer Form aufweisen, die in Betriebsstellung Ineinandergreifen.

5. Vorrichtung nach Anspruch 4, dadurch gekennzeichnet, daß das eine Zentrierelement aus einem zylinderförmigen Teil gebildet ist, das mit einer Mulde gleicher Form zusammenwirken soll, und das andere Zentrierelement ebenfalls aus einem Teil gebildet ist, das sich in eine zylinderförme Vertiefung einfügen soll, wobei sich dieses Element in die Zylinderförmige Vertiefung nur in einer Richtung (vv') einfügt, die quer zu einer die Mittelpunkte der beiden Teile verbindenden Linie (uu') verläuft.

6. Vorrichtung nach einem der vorhergehenden Ansprüche, dadurch gekennzeichnet, daß das Gestell (2) und das Versorgungselement zur Bedienung der Kassette (1) Mittel aufweisen, mit denen das Versorgungselement in Bezug auf das Gestell (2) sowohl der Höhe nach als auch in seitlicher Richtung in eine sogenannte Vorpositionierungsstellung gebracht werden kann, so daß die Kassette zum Gleiten auf dem Führungselement eingestellt ist.

7. Vorrichtung nach einem der vorhergehenden Ansprüche 3 bis 6, dadurch gekennzeichnet, daß die Kassette (1) an ihrer Basis (3a) eine Nut (6) T-förmigen Querschnitts aufweist, wobei die Oberseite (6a) dieser Nut (6) in der Positionierungsphase und in der Vorpositionierungsstellung auf den Rollen (26) zur Anlage kommt und die Unterseite der Platte (24) auf der Kassette (1) zur Anlage kommt, um deren Basisfläche (3a) in Betriebsstellung auf das Gestell (2) zu drücken.

8. Vorrichtung nach einem der vorhergehenden Ansprüche, dadurch gekennzeichnet, daß die Kassette (1) zwei Endflanken (7) umfaßt, die in Betriebsstellung als einzige auf dem Gestell (2) aufliegen, wobei die Feststellmittel auf diesen Endflanken (7) zur Anlage kommen.

9. Vorrichtung nach einem der vorhergehenden Ansprüche, dadurch gekennzeichnet, daß die Kassette eine obere Walze (10) und eine untere Walze (13) umfaßt, wobei die untere Walze (13) einer Kassette (1) rotierend auf Schildlagern montiert ist, die einstückig ausgebildet sind mit Schiebern (16), welche sich in Gleitschienen der Kassetten (1) vertikal zwischen zwei Stellungen bewegen können, nämlich einer Betriebsstellung, in der die beiden Walzen (10, 13) der Kassette (1) nahe beieinander liegen, und einer Ruhestellung, in der die untere Walze (13) abgesenkt ist, wobei das Gestell (2) Mittel aufweist, die die vertikale Bewegung der Schleber (16) steuern, um die untere Walze (13) aus der Ruhestellung in die Betriebsstellung und umgekehrt zu führen.

10. Vorrichtung nach Anspruch 9, dadurch gekennzeichnet, daß die Steuermittel aus Zylindern (50) gebildet sind, deren Kopf auf der Basis der Schieber (16) zur Anlage kommt, um deren vertikale Bewegung zu steuern.

11. Vorrichtung nach Anspruch 10, dadurch gekennzeichnet, daß der Kopf des Zylinders (50) auf ein Ende eines Hebels (56) wirkt, dessen anderes Ende auf den Feststellmitteln (24) zur Anlage kommt, wobei dieser Hebel (56) auf dem Schieber (16) zur Anlage kommt, um seine vertikale Bewegung zu gewährleisten.
